# FASCICULE DE BREVET EUROPEEN

(11) **EP 0 569 297 B1**
(45) Date de publication et mention de la délivrance du brevet: **19.06.1996**
(21) Numéro de dépôt: 93401161.0
(22) Date de dépôt: 05.05.1993
(51) Int. Cl.: F16L 3/22

(54) **Attache pour le maintien de plusieurs canalisations, câbles ou analogues**
Halterung für mehrere Leitungen, Kabel oder ähnliches
Holding device for several conduits, cables or the like

(30) Priorité: 07.05.1992 FR 9205660
(43) Date de publication de la demande: 10.11.1993
(73) Titulaire: RAPID S.A., F-75017 Paris (FR)
(72) Inventeur: Leon, Jean-Pierre, F-78000 Houilles (FR)
(74) Mandataire: Durand, Yves Armand Louis

(56) Documents cités:
- DE-B- 2 306 969
- DE-U- 8 213 664

## Description

La présente invention a essentiellement pour objet une attache pour le maintien de plusieurs canalisations, câbles ou analogues sur une caisse de véhicule par exemple.

On a déjà proposé des attaches pour le maintien de câbles ou de conduites et comprenant, d'une manière générale, deux parties élastiquement déformables et pouvant être réunies par clippage pour retenir lesdits câbles ou canalisations (voir document DE-U-8213664).

Toutefois, les attaches actuellement connues ne présentaient pas des caractéristiques idéales sur le plan des efforts à fournir au montage et au démontage, et il arrivait, qu'à la longue, principalement sous l'effet des vibrations, les câbles ou canalisations se désolidarisaient de l'attache.

Par ailleurs, on connaît d'après le document DE-B-2306969 une attache telle que décrite dans le préambule de la revendication 1.

La présente invention a pour but de remédier aux inconvénients ci-dessus en proposant une attache perfectionnée garantissant la facilité et la solidité du montage de plusieurs canalisations ou câbles sur une caisse de véhicule notamment.

A cet effet, l'invention a pour objet une attache pour le maintien de plusieurs canalisations, câbles ou analogues et du type comprenant deux parties élastiquement déformables pouvant être réunies par clippage et comportant à l'une de leurs extrémités des moyens coopérants tandis que des premiers crochets appartenant à une partie de l'attache assurent le clippage de cette partie sur les branches d'au moins une portion en U appartenant à l'autre partie de l'attache, caractérisée en ce que lesdits moyens coopérants sont constitués par un bec muni d'une fente appartenant à une partie de l'attache et par un doigt appartenant à l'autre partie de l'attache et insérable dans la fente, et en ce que les branches de ladite portion en U de l'attache comportent des seconds crochets pouvant s'encliqueter avec lesdits premiers crochets sous l'effet du rapprochement des parties de l'attache avec réaction d'appui au niveau du bec.

Suivant une autre caractéristique de cette attache, la fente et les branches de la portion en U précitée forment la face ouverte de l'une des parties de l'attache contre laquelle face s'applique une face pleine ou dos de l'autre partie de l'attache qui comporte le doigt précité et au moins deux crochets.

On précisera encore ici que du côté de la partie ouverte précitée, entre la fente et la portion en U précitée de l'une des parties de l'attache, débouchent d'autres portions en U avec languettes repliées vers l'intérieur du U et susceptibles de retenir des canalisations, câbles ou analogues.

Selon encore une autre caractéristique de l'invention, du côté de la face opposée à la face pleine ou dos de l'autre partie de l'attache débouchent des portions en U avec languettes repliées vers l'intérieur du U et susceptibles de retenir des canalisations, câbles ou analogues.

On précisera encore ici que le crochet sur les deux branches de la portion en U citée en premier lieu est tourné vers l'extérieur et coopère avec les deux crochets précités qui sont tournés l'un vers l'autre.

Les crochets coopèrent par l'intermédiaire d'une partie formant rampe permettant leur déformation élastique.

Cette attache est encore caractérisée par le fait que chaque partie de l'attache comporte, entre deux portions en U, des cloisons parallèles percées d'un orifice apte à recevoir un goujon ou analogue pour permettre la fixation.

Mais d'autres avantages de l'invention apparaîtront mieux dans la description détaillée qui suit et se réfère aux dessins annexés, donnés uniquement à titre d'exemple, et dans lesquels :

Les Figures 1 et 2 sont des vues respectivement de côté et en élévation de chacune des deux parties de l'attache, avant montage.

La figure 3 illustre également les deux parties de l'attache avant montage, mais ici en perspective.

La figure 4 est une vue de côté et en élévation des deux parties de l'attache en position assemblée, l'une de ces parties étant illustrée en traits pointillés pour clarifier l'assemblage par clippage de ces deux parties.

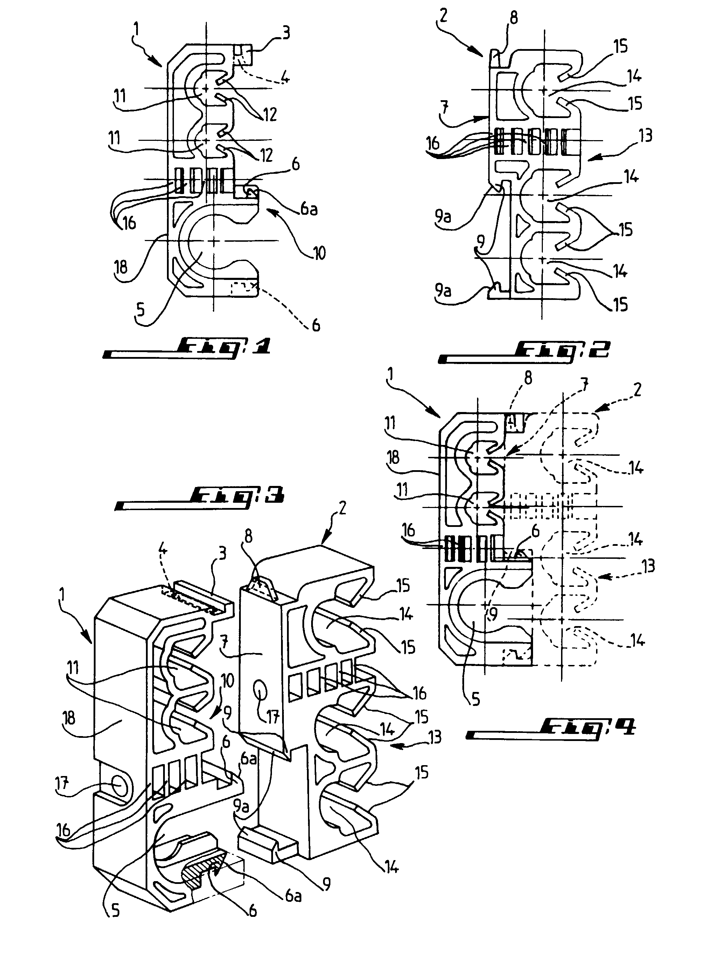

En se reportant notamment aux figures 1 à 3, on voit qu'une attache conforme à cette invention, comprend une partie 1 et une partie 2 réalisées chacune en une seule pièce par moulage d'un matériau plastique élastiquement déformable, et pouvant être solidarisées l'une de l'autre par clippage.

La partie 1 comporte à l'une de ses extrémités un bec 3 muni d'une fente 4, tandis que l'autre extrémité de la partie 1 comporte une portion 5 en forme de U dont l'extrémité des branches comporte un crochet 6.

L'autre partie de l'attache comporte une face pleine ou dos 7 dont fait saillie, à une extrémité, un doigt 8 susceptible de pénétrer dans la fente 4 de la partie 1, comme on l'expliquera en détail plus loin.

L'autre extrémité de la partie 2 de l'attache comporte deux crochets 9 pouvant s'engager par clippage sur les crochets 6 de la partie 1 de l'attache.

Comme on le voit sur la figure 4, le dos ou la face pleine 7 de la partie 2, lors de l'assemblage des parties 1 et 2, vient s'appliquer contre la face ouverte 10 de la partie 1.

Comme on le voit bien sur la figure 1 notamment, du côté de la face ouverte 10 de la partie 1, débouchent plusieurs portions en U 11 avec languettes 12 repliées vers l'intérieur du U et susceptibles de retenir des canalisations, câbles ou analogues (non représentés), de même que la portion 5 en forme de U précédemment décrite peut elle aussi recevoir une canalisation ou un câble.

La partie 2 de l'attache, comme on le voit bien sur la figure 2 notamment comporte elle aussi, du côté de sa face 13 opposée à la face pleine 7, des portions en U 14 qui débouchent du côté de ladite face 13 et qui sont pourvues de languettes 15 repliées vers l'intérieur de ces portions en U et susceptibles d'y retenir des canalisations, câbles ou analogues (non représentés).

Les deux crochets 6 des branches de la portion 5 en forme de U de la partie 1 sont tournés vers l'extérieur du U, comme on le voit bien sur les figures 1 et 3 notamment, tandis que les deux crochets 9 prévus sur le dos 7 de la partie 2 sont tournés l'un vers l'autre.

Les crochets 6 et les crochets 9 coopèrent l'un avec l'autre par l'intermédiaire d'une partie formant rampe 6a, 9a sur chaque crochet de manière à permettre leur clippage par déformation élastique, comme on le décrira plus loin en détail.

Comme on le voit en 16 sur les figures 1 et 3, la partie 1 comporte des cloisons parallèles 16 percées chacune d'un orifice 17 apte à recevoir un goujon ou analogue (non représenté) solidaire de la caisse d'un véhicule par exemple et permettant ainsi la fixation de la partie 1 par son dos 18 sur ladite caisse. Les cloisons 16 relient l'une des branches de la portion en forme de U 5 à une autre portion adjacente en forme de U 11.

La partie 2 de l'attache, comme on le voit sur les figures 2 et 3, comporte elle aussi des cloisons 16 chacune percées d'un orifice 17 apte à recevoir le goujon précité. Les cloisons 16 sont ici prévues entre deux portions en U 14 adjacentes.

Ainsi, comme on le comprend, chaque partie 1 ou 2 peut être fixée indépendamment sur une tôle comportant un goujon, ce après quoi les canalisations ou câbles à maintenir sont insérés à force au travers des lèvres 12, 15 dans les portions en forme de U 11 ou 14, étant entendu que, dans le cas de la partie 1, une canalisation ou un câble pourra être aussi maintenu dans la portion en forme de U 5.

Mais, on décrira ci-après l'assemblage des deux parties 1 et 2 de l'attache, ce qui constitue l'essentiel de l'invention, en se reportant plus particulièrement à la figure 4.

Tout d'abord, on insère le doigt 8 de la partie 2 dans la fente 4 de la partie 1.

Ensuite, on comprime l'une contre l'autre les parties 1 et 2, et par réaction d'appui au niveau du bec 3 de la partie 1, les crochets 9 de la partie 2 viendront, par déformation de ces crochets et des crochets 6 de la partie 1, grâce aux rampes coopérantes 6a et 9a, s'encliqueter dans lesdits crochets 6, et les deux parties 1 et 2 seront ainsi assemblées, comme on le voit bien sur la figure 4.

Bien entendu, préalablement à l'assemblage qui vient d'être décrit, on aura inséré des canalisations ou des câbles dans les portions en U 5 et 11. Après assemblage, on pourra insérer d'autres canalisations ou câbles dans les portions en U 14 de la partie 2, étant entendu que, dans ce cas là, lesdites canalisations seront simplement retenues par les languettes 15.

On a donc réalisé suivant l'invention une attache permettant le maintien élastique et solide de plusieurs canalisations ou câbles, et se prêtant à de multiples associations de canalisations ou câbles ayant des fonctions et des diamètres différents.

## Revendications

1. Attache pour le maintien de plusieurs canalisations, câbles ou analogues et du type comprenant deux parties élastiquement déformables (1, 2) pouvant être réunies par clippage et comportant à l'une de leurs extrémités des moyens coopérants (4, 8), tandis que des premiers crochets (9) appartenant à une partie (2) de l'attache assurent le clippage de cette partie sur les branches d'au moins une portion en U appartenant à l'autre partie (1) de l'attache, caractérisée en ce que lesdits moyens coopérants sont constitués par un bec (3) muni d'une fente (4) appartenant à une partie (1) de l'attache et par un doigt (8) appartenant à l'autre partie (2) de l'attache et insérable dans la fente (4), et en ce que les branches de ladite portion en U (5) de l'attache comportent des seconds crochets (6) pouvant s'encliqueter avec lesdits premiers crochets (9) sous l'effet du rapprochement des parties (1, 2) de l'attache avec réaction d'appui au niveau du bec (3).

2. Attache selon la revendication 1, caractérisée en ce que la fente (4) et les branches de la portion en U précitée (5) forment la face ouverte (10) de l'une (1) des parties de l'attache contre laquelle face (10) s'applique une face pleine ou dos (7) de l'autre partie (2) de l'attache qui comporte le doigt précité (8) et au moins deux crochets (9).

3. Attache selon la revendication 2, caractérisée en ce que du côté de la face ouverte précitée (10), entre la fente (4) et la portion en U précitée (5) de l'une (1) des parties de l'attache, débouchent d'autres portions en U (11) avec languettes (12) repliées vers l'intérieur du U et susceptibles de retenir des canalisations, câbles ou analogues.

4. Attache selon la revendication 2 ou 3, caractérisée en ce que du côté de la face (13) opposée à la face pleine ou dos (7) de l'autre partie (2) de l'attache, débouchent des portions en U (14) avec languettes (15) repliées vers l'intérieur du U et susceptibles de retenir des canalisations, câbles ou analogues.

5. Attache selon la revendication 1 ou 2, caractérisée en ce que le crochet (6) sur les deux branches de la portion en U précitée (5) est tourné vers l'extérieur et coopère avec les deux crochets précités (9) qui sont tournés l'un vers l'autre.

6. Attache selon la revendication 5, caractérisée en ce que les crochets précités (6, 9) coopèrent par l'intermédiaire d'une partie formant rampe (6a, 9a) permettant leur déformation élastique.

7. Attache selon l'une des revendications précédentes, caractérisée en ce que chaque partie précitée (1, 2) comporte entre deux portions en U des cloisons parallèles (16) percées d'un orifice (17) apte à recevoir un goujon ou analogue pour permettra la fixation.

## Patentansprüche

1. Halterung zum Halten von mehreren Leitungen, Kabeln oder dergleichen und der zwei elastisch verformbare Teile (1, 2) umfassenden Gattung, die durch Klemmen vereinigt werden können und an dem einen ihrer Enden zusammenwirkende Mittel (4, 8) aufweisen, während zu einem Teil (2) der Halterung gehörende erste Haken (9) das Einklemmen dieses Teiles an den Schenkeln von wenigstens einem zu dem anderen Teil (1) der Halterung gehörenden U-förmigen Abschnittes gewährleisten, dadurch gekennzeichnet, dass die besagten zusammenwirkende Mittel durch eine mit einem Schlitz (4) versehene und zu dem Teil (1) der Halterung gehörende Nase (3) und durch einen zu dem anderen Teil (2) gehörenden und in den Schlitz (4) einsetzbaren Finger (8) gebildet werden und dass die Schenkel des besagten U-förmigen Abschnittes (5) der Halterung zweite Haken (6) aufweisen, die an den ersten Haken (9) unter der Wirkung der Annäherung der Teile (1, 2) der Halterung mit Stützrückwirkung im Bereich der Nase (3) einrastbar sind.

2. Halterung nach Anspruch 1, dadurch gekennzeichnet, dass der Schlitz (4) und die Schenkel des vorgenannten U-förmigen Abschnittes (5) die offene Stirnfläche (10) des einen (1) der Teile der Halterung bilden, an welcher Stirnfläche (10) sich eine Vollwand- bzw. Rückenfläche (7) des anderen Teiles (2) der Halterung, die den vorgenannten Finger (8) und wenigstens zwei Haken (9) aufweist, anlegt.

3. Halterung nach Anspruch 2, dadurch gekennzeichnet, dass zu der vorgenannten offenen Stirnfläche (10) hin, zwischen dem Schlitz (4) und dem vorgenannten U-förmigen Abschnitt (5) des einen (1) der Teile der Halterung andere U-förmige Abschnitte (11) mit nach innen des U's umgebogenen und zum Zurückhalten der Leitungen, Kabel oder dergleichen geeigneten Zungen (12) ausmünden.

4. Halterung gemäss Anspruch 2 oder 3, dadurch gekennzeichnet, dass zu der, der Vollwand- bzw. Rückenfläche (7) des anderen Teiles (2) der Halterung entgegengesetzten Fläche (13) hin U-förmige Abschnitte (14) mit nach innen des U's umgebogenen und zum Zurückhalten der Leitungen, Kabel oder dergleichen geeigneten Zungen (15) ausmünden.

5. Halterung nach Anspruch 1 oder 2, dadurch gekennzeichnet, dass der Haken (6) an den beiden Schenkeln des vorgenannten U-förmigen Abschnittes (5) nach aussen gewandt ist und mit denjenigen vorgenannten Haken (9), die einander zugewandt sind, zusammenwirkt.

6. Halterung gemäss Anspruch 5, dadurch gekennzeichnet, dass die vorgenannten Haken (6, 9) über einen deren elastische Verformung gestattenden rampenförmigen Teil (6a, 9a) zusammenwirken.

7. Halterung nach einem der vorangehenden Ansprüche, dadurch gekennzeichnet, dass jeder vorgenannte Teil (1, 2) zwischen zwei U-förmigen Abschnitten, parallele Trennewände (16) aufweist, durch welche ein zur Aufnahme eines die Befestigung gestattenden Stiftbolzen oder dergleichen geeignetes Loch (17) gebohrt ist.

## Claims

1. Attachment fitting for the holding of several conduits, cables or the like and of the type comprising two elastically deformable parts (1, 2) which may be joined through clipping and comprising co-operating means (4, 8) at one of their ends whereas first hooks (9) belonging to one part (2) of the attachment fitting ensure the clipping of this part onto the legs of at least one U-shaped portion belonging to the other part (1) of the attachment fitting and by a finger (8) belonging to the other part (2) of the attachment fitting and insertable into the slit (4) and in that the legs of the said U-shaped portion (5) of the attachment fitting comprise second hooks (6) which may interlock themselves with the said first hooks (9) under the effect of the bringing together of the parts (1, 2) of the attachment fitting with a bearing reaction at the level of the nose (3).

2. Attachment fitting according to claim 1, characterized in that the slit (4) and the legs of the aforesaid U-shaped portion (5) form the open face (10) of one (1) of the parts of the attachment fitting upon which face (10) is applying one solid face or back (7) of the other part (2) of the attachment fitting which comprises the aforesaid finger (8) and at least two hooks (9).

3. Attachment fitting according to claim 2, characterized in that towards the aforesaid open face (10) between the slit (4) and the aforesaid U-shaped portion (5) of one (1) of the parts of the attachment fitting are opening other U-shaped portions (11) with tongues (12) bent inwards of the U and adapted to retain the conduits, cables or the like.

4. Attachment fitting according to claim 2 or 3, characterized in that towards that face (13) which is opposite to the solid face or back (7) of the other part (2) of the attachment fixture are opening U-shaped portions (14) with tongues (15) bent inwards of the U and adapted to retain conduits, cables or the like.

5. Attachment fitting according to claim 1 or 2, characterized in that the hook (6) on both legs of the aforesaid U-shaped portion (5) is turned outwards and cooperates with both aforesaid hooks (9) which are turned towards each other.

6. Attachment fitting according to claim 5, characterized in that the aforesaid hooks (6, 9) co-operate through the medium of a ramp-like portion (6a, 9a) permitting their elastic deformation.

7. Attachment fitting according to one of the foregoing claims, characterized in that each aforesaid part (1, 2) comprises between two U-shaped portions, parallel partition walls (16) through which is drilled a hole (17) adapted to receive a stud or the like for permitting the fastening.
